# EUROPEAN PATENT APPLICATION

(11) **EP 4 451 031 A2**
(43) Date of publication of application: **23.10.2024**
(21) Application number: 24170942.7
(22) Date of filing: 18.04.2024
(51) Int. Cl.: G02B 6/44

(54) **TIGHT BUFFERED OPTICAL FIBER CABLE**

(30) Priority: 19.04.2023 IN 202311028463
(71) Applicant: Sterlite Technologies Limited, Gurugram, Haryana 122102 (IN)
(72) Inventor: Swarnava, Saha, 122102 Gurugram (IN); Darshana, Bhatt, 122102 Gurugram (IN); Harsh, Prasad, 122102 Gurugram (IN)
(74) Representative: Petraz, Gilberto Luigi

(57) **Abstract**

The present disclosure relates to an optical fiber cable (100) comprising an optical fiber (102), a buffer layer (104), a deformable layer (106), one or more tensile yarns (108a-108n), and a sheath (110). In particular, the buffer layer (104) surrounds the optical fiber (102) and defines a tight buffered optical fiber (112). The deformable layer (106) is wrapped around the tight buffered optical fiber (112) and has two longitudinal overlap ends (114a, 114b) defining an overlap portion (116). The unique placement of one or more tensile yarns (108a-108n) are disposed above the deformable layer (106) inside the optical fiber cable (100) providing minimized fibre module retraction in operating condition and the protected optical fiber has less than 0.34% strain installation load.

## Description

### TECHNICAL FIELD

Embodiments of the present disclosure relate to the field of telecommunication fiber, a last mile optical fiber drop cable and more particularly, relate to a tight buffered optical fiber cable.
This application claims the benefit of Indian Application No. 202311028463 titled "TIGHT BUFFERED OPTICAL FIBER CABLE" filed by the applicant on 19th April 2023, which is incorporated herein by reference in its entirety.

### BACKGROUND ART

Optical fibers are widely used in optical cables. Single tight buffer based optical fiber cable face fiber retraction or tight buffer retraction issues during maximum load conditions. This retraction of fibers leads to breakage of spliced and/or connectorized fiber and loss of connectivity. In traditional cable constructions, free space is required to provide around the fibre module for optimum optical performances. This free space around the module in the cable core fails to provide enough static friction with the surrounding layer allowing free movement of the fibre module. Due to this, coupling of tight buffer modules with surrounding layers is not optimum and leads to fiber retraction during extreme environmental conditions in operations.

Optical fiber cables are utilized in a wide variety of applications. In many instances, the cables include tight buffered optical fibers. A tight buffered optical fiber typically includes an optical waveguide fiber, one or more protective coatings (e.g., a primary coating, a secondary coating, etc.) surrounding an outer surface of the fiber, and a polymeric buffer layer formed to surround the optical fiber and its protective coating(s). The buffer layer is formed in intimate contact with the protective coating(s). Many conventional materials utilized to form buffer layers may be subject to expansion and contraction as a result of environmental temperature and/or humidity variations. Buffer layer expansion and/or shrinkage (e.g., cold temperature shrinkage, etc.) can cause undesirable tensile and compressive forces to be transferred to the optical fibers, thereby resulting in degradation of the optical fiber performance.

Prior art KR20220051570A reference discloses an optical fiber cable with a central optical unit and having a water blocking tape (WBT) and aramid yarns. However, the WBT is placed between aramid yarns and sheath.

Prior art reference US2022373752A1 discloses a tight buffer cable having a WBT and aramid yarns. However, the WBT is placed between aramid yarns and sheath.

Prior art reference US2010150505A1 discloses an optical fiber cable (OFC) with a tight buffered fiber and one or more aramid yarns positioned for coupling with sheath.

Prior art reference EP2409190B1 discloses an OFC with a central optical unit and placement of aramid yarns with specific angular span between sheath and tight buffer to prevent adhesion.

The conventional optical fiber cable solutions disclosed in references such as KR20220051570A, US2022373752A1, US2010150505A1, and EP2409190B1 exhibit inherent deficiencies, specifically in the placement of water-blocking tape and tensile yarn, as well as the absence of an optimized dimensional configuration and necessary coupling between constituent components. These deficiencies collectively result in fiber retraction and undermine the overall performance of the cable system. The innovation described in this patent application addresses these shortcomings, presenting a technical advancement that significantly enhances the reliability and effectiveness of optical fiber cable systems.

Further, the current solutions encounter difficulties associated with the available free space surrounding the fiber module, resulting in less than optimal coupling with adjacent layers and the occurrence of fiber retraction under operational conditions.

Additionally, the optical communication industry has identified a persistent need for an optical fiber cable characterized by optimal dimensions and components, aiming to mitigate the drawbacks inherent in traditional cables. Notably, these drawbacks include challenges associated with fiber retraction and susceptibility to connectivity loss, particularly under extreme environmental conditions ability of optical fiber cables in diverse and challenging operational scenarios. Further, the existing solutions are marked by suboptimal placement of water-blocking tape, inadequacies in tensile yarn positioning, and a deficiency in achieving an optimal cable dimension and requisite coupling between components.

Accordingly, to overcome the disadvantages of the prior art, there is an urgent need for a technical solution that overcomes the above-stated limitations in the prior arts by providing an optical fiber cable with an optimal dimension. Thus, the present disclosure directly addresses these industry concerns, representing a notable technical advancement in the field by presenting a solution that significantly improves the performance. The proposed invention provides a tight buffered optical fiber cable.

### SUMMARY OF THE DISCLOSURE

Embodiments of the present disclosure relates to an optical fiber cable comprises an optical fiber, a buffer layer that surrounds the optical fiber to define a tight buffered optical fiber, a deformable layer wrapped around the tight buffered optical fiber, one or more tensile yarns disposed above the deformable layer a sheath that surrounds the deformable layer and the one or more tensile yarns (108a-108n). The deformable layer has two longitudinal overlap ends that defines an overlap portion. Moreover, centre of the overlap portion of the deformable layer and a centre of a tensile yarn of the one or more tensile yarns is separated by a predefined angular distance with respect to the centre of the cable at one cross section along a length of the optical fiber cable. Further, the predefined angular distance is greater than or equal to 60 Degrees (60°).

According to the first aspect of the present disclosure, the one or more tensile yarns comprising at least 1 yarn and at most 6 yarns.

According to the second aspect of the present disclosure, the deformable layer is a water blocking tape (WBT).

According to the third aspect of the present disclosure, width of the overlap portion is less than 4 millimetres (mm).

According to the fourth aspect of the present disclosure, the angular distance between the centres of two or more tensile yarns of the one or more tensile yarns is greater than or equal to 30 degrees (30°) with respect to centre of the optical fiber cable (100).

According to the fifth aspect of the present disclosure, the tight buffered optical fiber has an extra tight buffer length that is in a range of 0.04% to 0.2 %. The tight buffered optical fiber retracts less than 5mm/10m when the optical fiber cable operates at a tensile load of greater than 400 Newton (N).

According to the sixth aspect of the present disclosure, the centre of the overlap portion of the deformable layer and the centre of the tensile yarn of the one or more tensile yarns are separated by ≥ 90° angular distance with respect to centre of the optical fiber cable at minimum one cross section of the optical fiber cable (100).

According to the seventh aspect of the present disclosure, diameter of the optical fiber cable is less than 6 mm. The optical fiber cable has a breaking load that is in a range between 1350 Newton (N) and 2500 N. Further, the optical fiber undergoes a strain of less than 0.34% at an aerial load up to 150 N.

According to the eighth aspect of the present disclosure, the stripping force of the tight buffered optical fiber is in a range between 1 N and 12 N for a sample of 20 mm tight buffered optical fiber.

According to the ninth aspect of the present disclosure, the predefined angular distance is measured in one of, a clockwise direction and an anti-clockwise direction.

The foregoing objectives of the present disclosure are attained by providing a tight buffered optical fiber cable.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating a cross-sectional view of an optical fiber cable in accordance with an embodiment of the present disclosure;
Fig. 2 is a pictorial snapshot illustrating a cross-sectional view of another optical fiber cable with an embodiment of the present disclosure;
Fig. 3 is a pictorial snapshot illustrating a cross-sectional view of another optical fiber cable in accordance with an embodiment of the present disclosure.

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**
Term "optical fiber" as used herein refers to a light guide that provides high-speed data transmission. The optical fiber includes one or more glass core regions and a glass cladding region. The light moving through the glass core regions of the optical fiber relies upon the principle of total internal reflection, where the glass core regions have a higher refractive index (n1) than the refractive index (n2) of the glass cladding region of the optical fiber.
Term "optical fiber cable" as used herein refers to a cable that encloses one or more optical fibers.
Term "tight buffered optical fiber" as used herein refers to a thermoplastic layer that may surround an optical fiber and in contact with a single optical fiber such that an inner diameter of the thermoplastic layer is substantially equal to an outer diameter of the optical fiber.
Term "deformable layer" as used herein refers to a layer having a shape that may be deformed using a small force. The layer can be wrapped over the tight buffered optical fiber.
Term "extra tight buffer length" as used herein refers to an additional length of tight buffer component with respect to length of a sheath of the optical fiber cable. In other words, the extra tight buffer length is the delta of length of the tight buffer as compared to the length of cable sheath.
Term "fiber retraction" as used herein refers to retraction of tight buffer or fiber in the cable is < 5mm/10m when the cable is operating at a tensile load of > 400N. The unwanted retraction of optical fibers in cable leads to break of fibers and hence connectivity loss.
Term "stripping force" as used herein refers to an amount of force required to separate the optical fiber from the buffer layer (*e.g.,* a thermoplastic buffer layer) without physically damaging the optical fiber or layers of the optical fiber.

The tight buffered optical fibers provides a novel configuration featuring a deformable layer, one or more tensile yarns, and precise angular distances between them effectively mitigating the issue of fiber retraction.

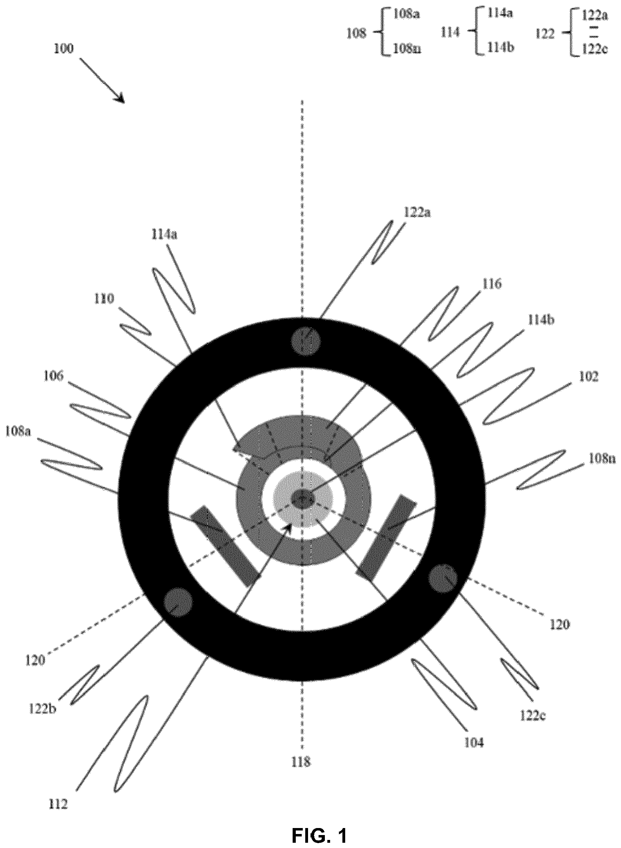

Fig. 1 is a pictorial snapshot illustrating a cross sectional view of an optical fiber cable 100. In particular, the optical fiber cable 100 may be installed through various aerial overhead poles or laid inside various ducts that may be used in different applications. The optical fiber cable 100 may have a breaking load that may be in a range between 1350 Newton (N) and 2500 N.

In particular, the optical fiber cable 100 has an optical fiber 102, a buffer layer 104, a deformable layer 106, one or more tensile yarns 108a-108n (hereinafter collectively referred to and designated as "the tensile yarns 108"), and a sheath 110. Moreover, the optical fiber 102 may be anyone of but not limited to, a single mode optical fiber, a multi-mode optical fiber, a single core optical fiber, and a multi-core optical fiber. Further, the optical fiber 102 may undergo a strain of less than 0.34% at an aerial load of up to 150 N.

The buffer layer 104 surrounds the optical fiber 102 and may define a tight buffered optical fiber 112. In particular, the tight buffered optical fiber 112 has a stripping force that may be in a range between 1 N and 12 N. Moreover, the tight buffered optical fiber 112 is easily strippable up to 30 millimeters (mm). In alternative embodiments, the tight buffered optical fiber 112 is easily strippable up to 20 millimeters (mm). Further, the buffer layer 104 may tightly or semi-tightly surround the optical fiber 102 to define the tight buffered optical fiber 112.

In different aspects of the present disclosure, the material of the buffer layer 104 may be anyone of but not limited to, polyethylene, low-smoke zero-halogen (LSZH), polyvinyl chloride (PVC), thermoplastic polyurethane (TPU), and the like.

In accordance with an embodiment of the present disclosure, the deformable layer 106 may be wrapped around the tight buffered optical fiber 112. In particular, the deformable layer 106 may have two longitudinal overlap ends 114a and 114b (hereinafter collectively referred to and designated as "the overlap ends 114") that may define an overlap portion 116. Moreover, the deformable layer 106 may be but not limited to a water-blocking tape, a mica tape, a fire-retardant water blocking tape, a heat barrier tape, a polyester tape, and the like. Aspects of the present disclosure are intended to include and/or otherwise cover any type of deformable layer, without deviating from the scope of the present disclosure.

Further, the deformable layer 106 may be deformed with a force that may be less than 0.5 Newton. Alternatively, the deformable layer 106 may be deformed with a force that may be less than 1 N.

In some aspects of present disclosure, there may be free space present in-between the tight buffered optical fiber 112 and the deformable layer 106.

In accordance with an embodiment of the present disclosure, the overlap portion 116 may have a width that may be less than 4 mm. In particular, the overlap portion 116 having the width less than 4 mm may facilitate easier implementation in a small sized optical fiber cable. Moreover, the overlap portion 116 having the width less than 4 mm may eliminate the requirement of additional material for the deformable layer 106.

The tensile yarns 108 may be disposed above the deformable layer 106. Particularly, the centre 118 of the overlap portion 116 of the deformable layer 106 and a centre 120 of a tensile yarn of the tensile yarns 108 are separated by a predefined angular distance with respect to the centre of the cable 100 at least one cross section along a length of the optical fiber cable 100. The predefined angular distance may be greater than or equal to 60 Degrees (60°). Further, the predefined angular distance may be measured in any of, a clockwise direction and in an anti-clockwise direction.

Each tensile yarn of the tensile yarn 108 may be anyone of but not limited to, an aramid yarn, a glass roving yarn, and a poly-ethylene yarn.

In accordance with an embodiment of the sheath 110 may surround the deformable layer 106 and the tensile yarns 108. In particular, the material of the sheath 110 may be any but not limited to, polyethylene, low-smoke zero-halogen (LSZH), polyvinyl chloride (PVC), thermoplastic polyurethane (TPU), and the like.

In some aspects of the present disclosure, the tensile yarns 108 may have at least 1 yarn and at most 6 yarns.

In some aspects of the present disclosure, the deformable layer 106 may be a water blocking tape (WBT).

In some aspects of the present disclosure, the width of overlap portion 116 may be less than 4 millimetres (mm).

The angular distance between two or more tensile yarns of the tensile yarns 108 may be greater than or equal to 30 degrees (30°) with respect to the centre of the cable (100). In particular, the angular distance between two or more tensile yarns of the tensile yarns 108 greater than 30° enables uniform coupling of a tight buffer with an inner surface of the sheath 110. Moreover, the angular distance between two or more tensile yarns of the tensile yarns 108 greater than 30° may not allow two or more tensile yarns of the tensile yarns 108 to overlap with each other. The angular distance may be measured in any, a clockwise direction and an anti-clockwise direction.

In some aspects of the present disclosure, the tight buffered optical fiber 112 may have an extra tight buffer length in range of 0.04% to 0.2%. The tight buffered optical fiber 112 having the extra tight buffer length below than 0.04% may not be sufficient for bending and handling operations and may cause stresses to the tight buffered optical fiber 112. This may lead to physical damage to the tight buffered optical fiber 112. The tight buffered optical fiber 112 having the extra tight buffer length above than 0.2% may cause stress accumulation inside the core, which may generate excess radial pressure on the tight buffered optical fiber 112 which leads to degradation in optical property.

In accordance with an embodiment of the present disclosure the tight buffered optical fiber 112 may retract *i.e.,* fiber retraction may be less than 5mm/10m when the optical fiber cable 100 operates at a tensile load of greater than 400.

In accordance with an embodiment of the present disclosure the optical fiber cable 100 may have an outer diameter that may be less than 6 millimeters (mm). Thus, making it light weight and reduces cost for installation of the optical fiber cable 100.

In accordance with an embodiment of the present disclosure, the centre 118 of the overlap portion 116 of the deformable layer 106 and the centre 120 of the tensile yarn of the tensile yarns 108 are separated by ≥ 90° angular distance with respect to centre of the cable (100) at minimum least one cross section of the optical fiber cable 100.

In accordance with an embodiment of the present disclosure, the optical fiber cable 100 has a plurality of embedded strength members 122a-122c (hereinafter collectively referred to and designated as "the strength members 122"). The strength members 122 may be arranged in the sheath 110 and provide the required tensile strength and stiffness to the cable 100. Each strength member of the strength members 122 are made up of a material, including but not limited to, reinforced aramid yarn, reinforced glass yarns, and steel.

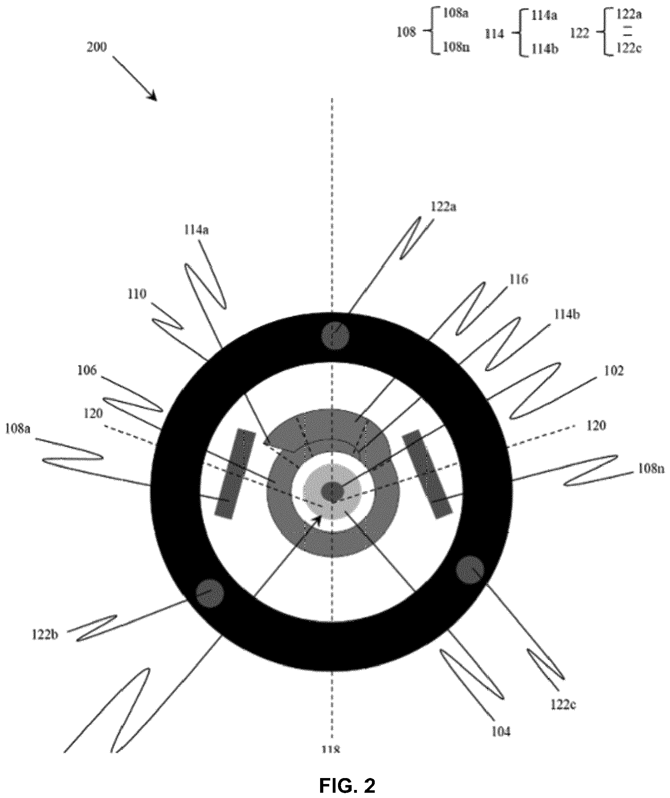

Fig. 2 is a snapshot illustrating a cross sectional view of another optical fiber cable 200 substantially similar to the optical fiber cable 100, in terms of structural and functional aspects and the like elements of the optical fiber cable 100. The centre 118 of the overlap portion 116 of the deformable layer 106 and the centre 120 of the tensile yarn of the tensile yarns 108 are separated by 60° angular distance with respect to the centre of the cable 200 at minimum one cross section of the optical fiber cable 200.

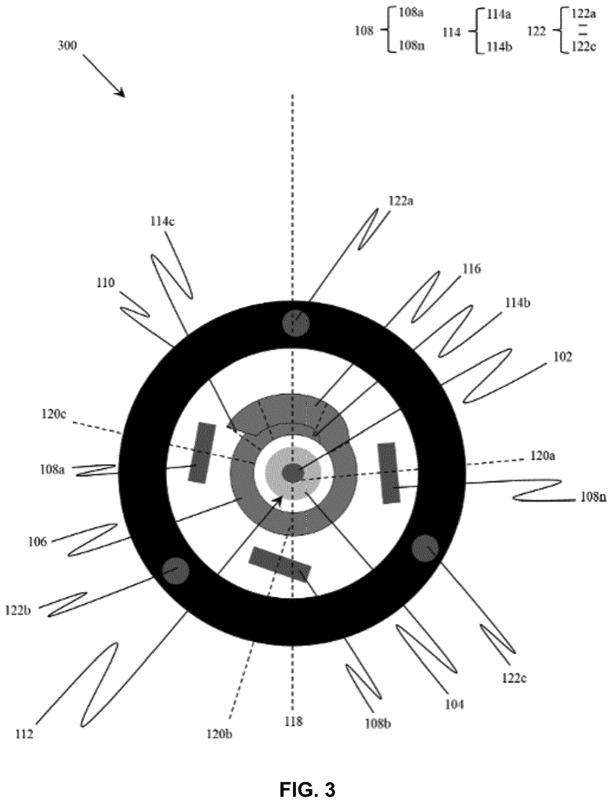

Fig. 3 is a snapshot illustrating a cross sectional view of another optical fiber cable 300 substantially similar to the optical fiber cable 100, in terms of structural and functional aspects and the like elements of the optical fiber cable 100.The tensile yarns 108 may be 3 tensile yarns *i.e.,* 108a, 108b, and 108c.

In one aspect of the present disclosure, the centre 118 of the overlap portion 116 of the deformable layer 106 and the centre 120a of the tensile yarn 108a of the tensile yarns 108 are separated by at least 60° angular distance with respect to centre of the cable 300 at least one cross section of the optical fiber cable 300.

In alternative aspect of the present disclosure, the centre 120a of the tensile yarn 108a of the tensile yarns 108 and centre 120b of the tensile yarn 108b of the tensile yarns 108 are separated by at least 30° angular distance with respect to centre of the cable 300 at least one cross section of the optical fiber cable 300. Further, the centre 120b of the tensile yarn 108b of the tensile yarns 108 and centre 120c of the tensile yarn 108c of the tensile yarns 108 are separated by at least 30° angular distance with respect to centre of the cable 300 at least one cross section of the optical fiber cable 300.

In one or more aspect of the present disclosure, the optical fiber cable (100) characterizes an optical fiber (102), a buffer layer (104) that surrounds the optical fiber (102) to define a tight buffered optical fiber (112), a deformable layer (106) wrapped around the tight buffered optical fiber (112), where the deformable layer (106) has two longitudinal overlap ends (114a, 114b) that defines an overlap portion (116), one or more tensile yarns (108a-108n) disposed above the deformable layer (106) and a sheath (110) that surrounds the deformable layer (106) and the one or more tensile yarns (108a-108n). The centre (118) of the overlap portion (116) of the deformable layer (106) and centre (120) of a tensile yarn of the one or more tensile yarns (108a-108n) is separated by a predefined angular distance with respect to the centre of the cable (100) at atleast one cross section along a length of the optical fiber cable (100). Moreover, the angular distance between the centres of two or more tensile yarns of the one or more tensile yarns (108a-108n) is greater than or equal to 30 degrees (30°) with respect to centre of the optical fiber cable (100). The width of the overlap portion (116) is less than 4 millimetres (mm).

In one or more aspect of the present disclosure, the centre (118) of the overlap portion (116) of the deformable layer (106) and the centre (120) of the tensile yarn of the one or more tensile yarns (108a-108n) is separated by ≥ 90° angular distance with respect to centre of the optical fiber cable (100) at minimum one cross section of the optical fiber cable (100).

In one or more aspect of the present disclosure, the optical fiber (102) undergoes a strain of less than 0.34% at an aerial load up to 150 N. Further, the stripping force of the tight buffered optical fiber (112) is in a range between 1 N and 12 N for a sample of 20 mm tight buffered optical fiber.

In accordance with an embodiment of the present invention, the essential components of the invention includes a deformable layer, one or more tensile yarns positioned at specific angular orientations, and a protective sheath. The components collectively serve to prevent fiber retraction and significantly improve cable performance, particularly in the face of extreme operating conditions. Further, the collaboration between the deformable layer and the specified tensile yarns functions synergistically to prevent fiber retraction, ensuring an optimal and consistent coupling with surrounding layers. Further, the integration of components embodies an approach, offering enhanced reliability and performance in addressing the challenges associated with fiber retraction in optical fiber cables.

In accordance with an embodiment of the present invention, the precise angular positioning of the tensile yarns plays a pivotal role in achieving uniform coupling between the tight buffer unit and the sheath, thereby presenting a robust and highly effective solution to the identified problem.

The present invention pertains to mitigating the challenge of fiber retraction and associated connectivity loss observed in optical fiber cables, specifically under maximum load conditions.

Advantageously, the optical fiber cable 100 minimize the fiber retraction in the tight buffered cable and facilitate to uniformly couple the tight buffer with an inner surface of the sheath 110. The tensile yarns 108 may be strategically positioned outside the deformable layer 106 ensures a uniform coupling of the tight buffer with the sheath 110 at a plurality of locations and minimizes the fiber retraction during or after installation of the optical fiber cable 100 thereby making the optical fiber cable 100 easy to install. The unique placement of the tensile yarns 108 above the deformable layer 106 inside the optical fiber cable 100 may provide minimized fibre module retraction in operating conditions while having safe cable break technology. The unique placement of the tensile yarns 108 may keep strain produced at installation load of upto 150N, less than 0.34%.

In addition to resolving fiber retraction challenges, the disclosed invention provides several other advantages, including achieving an optimal cable dimension, optimizing breaking load, cost-effectiveness, and a positive impact on overall cable performance. These collective benefits contribute to a more robust and efficient optical fiber cable system, surpassing the limitations of existing solutions.

In practical applications, the disclosed invention effectively prevents fiber retraction and improves cable performance in real-world operating conditions. This adaptability makes it well-suited for critical applications where optimal dimensions and connectivity are paramount, such as aerial installations or deployments under tension. In a broader context, the invention encompasses diverse optical fiber cable configurations incorporating deformable layers, tensile yarns, and specific angular distances. This inclusive approach offers a versatile solution to industry-wide challenges concerning fiber retraction and connectivity loss.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (100) **characterized in that**:
an optical fiber (102);
a buffer layer (104) that surrounds the optical fiber (102) to define a tight buffered optical fiber (112);
a deformable layer (106) wrapped around the tight buffered optical fiber (112),
wherein the deformable layer (106) has two longitudinal overlap ends (114a, 114b) that defines an overlap portion (116);
one or more tensile yarns (108a-108n) disposed above the deformable layer (106),
wherein a centre (118) of the overlap portion (116) of the deformable layer (106) and a centre (120) of a tensile yarn of the one or more tensile yarns (108a-108n) is separated by a predefined angular distance with respect to the centre of the cable (100) at atleast one cross section along a length of the optical fiber cable (100),
wherein the predefined angular distance is greater than or equal to 60 Degrees (60°); and
a sheath (110) that surrounds the deformable layer (106) and the one or more tensile yarns (108a-108n).

2. The optical fiber cable (100) of claim 1, wherein the one or more tensile yarns (108a-108n) comprising at least 1 yarn and at most 6 yarns.

3. The optical fiber cable (100) of claim 1, wherein the deformable layer (106) is a water blocking tape (WBT).

4. The optical fiber cable (100) of claim 1, wherein width of the overlap portion (116) is less than 4 millimetres (mm).

5. The optical fiber cable (100) of claim 1, wherein the angular distance between the centres of two or more tensile yarns of the one or more tensile yarns (108a-108n) is greater than or equal to 30 degrees (30°) with respect to centre of the optical fiber cable (100).

6. The optical fiber cable (100) of claim 1, wherein the tight buffered optical fiber (112) has an extra tight buffer length that is in a range of 0.04% to 0.2 %.

7. The optical fiber cable (100) of claim 1, wherein the tight buffered optical fiber (112) retracts less than 5mm/10m when the optical fiber cable (100) operates at a tensile load of greater than 400 Newton (N).

8. The optical fiber cable (100) of claim 1, wherein the centre (118) of the overlap portion (116) of the deformable layer (106) and the centre (120) of the tensile yarn of the one or more tensile yarns (108a-108n) are separated by ≥ 90° angular distance with respect to centre of the optical fiber cable (100) at atleast one cross section of the optical fiber cable (100).

9. The optical fiber cable (100) of claim 1, wherein a diameter of the optical fiber cable (100) is less than 6 mm.

10. The optical fiber cable (100) of claim 1, wherein the optical fiber cable (100) has a breaking load that is in a range between 1350 Newton (N) and 2500 N.

11. The optical fiber cable (100) of claim 1, wherein the optical fiber (102) undergoes a strain of less than 0.34% at an aerial load up to 150 N.

12. The optical fiber cable (100) of claim 1, wherein the stripping force of the tight buffered optical fiber (112) is in a range between 1 N and 12 N for a sample of 20 mm tight buffered optical fiber.

13. The optical fiber cable (100) of claim 1, wherein the predefined angular distance is measured in one of, a clockwise direction and an anti-clockwise direction.

14. An optical fiber cable (100) **characterized in that**:
an optical fiber (102);
a buffer layer (104) that surrounds the optical fiber (102) to define a tight buffered optical fiber (112);
a deformable layer (106) wrapped around the tight buffered optical fiber (112), wherein the deformable layer (106) has two longitudinal overlap ends (114a, 114b) that defines an overlap portion (116);
one or more tensile yarns (108a-108n) disposed above the deformable layer (106), wherein a centre (118) of the overlap portion (116) of the deformable layer (106) and a centre (120) of a tensile yarn of the one or more tensile yarns (108a-108n) is separated by a predefined angular distance with respect to the centre of the cable (100) at atleast one cross section along a length of the optical fiber cable (100),
wherein the angular distance between the centres of two or more tensile yarns of the one or more tensile yarns (108a-108n) is greater than or equal to 30 degrees (30°) with respect to centre of the optical fiber cable (100); and
a sheath (110) that surrounds the deformable layer (106) and the one or more tensile yarns (108a-108n).

15. The optical fiber cable (100) of claim 14, wherein width of the overlap portion (116) is less than 4 millimetres (mm).
